# EUROPÄISCHE PATENTSCHRIFT

(11) **EP 1 485 184 B1**
(45) Veröffentlichungstag und Bekanntmachung des Hinweises auf die Patenterteilung: **18.01.2006**
(21) Anmeldenummer: 03720238.9
(22) Anmeldetag: 26.03.2003
(51) Int. Cl.: B01D 45/00, B01D 45/18

(54) **SPÜLEINRICHTUNG FÜR TROPFENABSCHEIDER**
WASHING DEVICE FOR MIST ELIMINATORS
DISPOSITIF DE LAVAGE POUR SEPARATEURS DE GOUTTES

(30) Priorität: 26.03.2002 DE 10213342
(43) Veröffentlichungstag der Anmeldung: 15.12.2004
(73) Patentinhaber: Munters Euroform GmbH, 52072 Aachen (DE)
(72) Erfinder: WOLF, Hubert, 40668 Meerbusch (DE)
(74) Vertreter: Hauck, Graalfs, Wehnert, Döring, Siemons
(86) Internationale Anmeldenummer: PCT/DE2003/001003
(87) Internationale Veröffentlichungsnummer: WO 2003/080220

(56) Entgegenhaltungen:
- WO-A-92/11075
- US-A- 2 077 996
- US-A- 4 099 938
- US-A- 5 221 297
- US-A- 5 230 725

## Beschreibung

Die vorliegende Erfindung betrifft eine Spüleinrichtung für flachliegende oder schräg angeordnete Tropfenabscheider in Gaswäschern mit einer zentralen Welle mit mindestens zwei sich hiervon radial erstreckenden Spülarmen, die mit Düsen zum Besprühen eines Tropfenabscheiders versehen sind, einer an die Spülarme angeschlossenen Zuführeinrichtung für das Spülmedium und einem Antrieb für die Welle.

Gaswäscher besitzen normalerweise eine oder mehrere Lagen von Tropfenabscheidern, um den abgeführten Gasstrom zu entfeuchten. Solche Tropfenabscheider sind flachliegend im vertikal angeordneten Gaskanal vorgesehen. Bei der Anordnung von mehreren Lagen sind diese mit Abstand übereinander angeordnet.

Solche Tropfenabscheider müssen zumindest periodisch gereinigt werden, damit sie sich nicht zusetzen. Dabei ist es bekannt, der jeweiligen Abscheiderstufe anströmseitig und abströmseitig zugeordnete stationäre Bedüsungsrohre vorzusehen, die in Abständen von ca. 500 bis 700 mm mit Düsen bestückt sind. Meistens werden dafür Vollkegeldüsen mit einem Sprühwinkel von 70° bis 90° eingesetzt. Stationäre Bedüsungssysteme haben jedoch den Nachteil, daß bei einer hohen spezifischen Flächenbelastung diskontinuierlich schlagartig große Mengen des Spülmediums (Wasser) erforderlich sind.

Besonders auf der Abströmseite der letzten Stufe (Feinabscheiderabströmseite) haben diese Systeme den Nachteil, daß dabei große Mengen der Tropfenfeinanteile vom Gasstrom mitgerissen werden und in die Atmosphäre oder in die nachgeschalteten Komponenten gelangen.

Es ist ferner eine Spüleinrichtung für flachliegende Tropfenabscheider in Gaswäschern bekannt, die mit einem sogenannten Spülrad arbeitet. Dieses Spülrad besteht aus einer zentralen Welle und zwei hieran angeordneten Armen, die mit Düsen bestückt sind. Ein Antrieb sorgt für eine Drehung der Welle, wodurch die Spülarme den Querschnitt des zylindrisch ausgebildeten Gaskanales überstreichen. Diese Ausführungsform hat den Vorteil, daß gegenüber den stationären Systemen keine schlagartige Beaufschlagung mit großen Mengen des Spülmediums erfolgt, sondern das Spülmedium bei der Drehung der Spülarme kontinuierlich abgegeben wird. Dieses System ist jedoch hinsichtlich seiner Variabilität, dem Verbrauch an Spülmedium sowie dem für das Spülen benötigten Zeitaufwand immer noch verbesserungswürdig.

Eine Spüleinrichtung der eingangs beschriebenen Art ist aus der US-A-4 099 938 bekannt. Bei dieser bekannten Spüleinrichtung führt eine zentrale, vertikal angeordnete Welle mit zwei übereinander angeordneten Spülarmen volle Umdrehungen durch, um die Lamellen eines zwischen den Spülarmen angeordneten Tropfenabscheiders zu reinigen. Auf diese Weise überstreichen die Spülarme den Tropfenabscheider in Parallellage mit gleicher Geschwindigkeit.

Aus der WO-A-9211075 ist ein Verfahren zum Reinigen eines Tropfenabscheiders bekannt, bei dem Reinigungsstrahlen in zur Längserstreckung der Tropfenabscheiderlamellen senkrechter Richtung über diese verschoben werden und die Reinigungsstrahlen in dieser Richtung flach ausgebildet sind. Es findet eine lineare Hin- und Herbewegung der Reinigungsstrahlen statt, so daß hiermit jeweils ein bestimmter Abschnitt des Tropfenabscheiders besprüht wird. Über Ventile läßt sich die Spülmittelzufuhr zu bestimmten Spülrohren absperren und öffnen, so daß mit unterschiedlichen Spülrohren während unterschiedlicher Spülprozesse gearbeitet werden kann.

Der vorliegenden Erfindung liegt die Aufgabe zugrunde, eine Spüleinrichtung der eingangs beschriebenen Art zu schaffen, die bei einem geringen Verbrauch an Spülmedium und einem geringen Zeitaufwand besonders variabel arbeiten kann.

Diese Aufgabe wird erfindungsgemäß bei einer Spüleinrichtung der angegebenen Art durch die kennzeichnenden Merkmale von Patentanspruch 1 gelöst.

Mit des erfindungsgemäβ ausgebildeten Spüleinrichtung gelingt es, mit niedrigen Mengen des Spülmediums und geringer momentaner Belastung bei gleichzeitiger Effizienzerhöhung der Abscheiderabreinigung den Tropfenaustrag zu minimieren, insbesondere die Variabilität der Einsatzmöglichkeiten der Spüleinrichtung zu erhöhen. So können mit der erfindungsgemäß ausgebildeten Spüleinrichtung beispielsweise nur ausgewählte Winkelsegmente bedüst werden. Ferner kann die Bedüsung nur bei der Hinbewegung oder nur bei der Herbewegung erfolgen. Die Geschwindigkeiten während der Hinbewegung oder der Herbewegung können variiert werden, wobei beispielsweise die Geschwindigkeit der Herbewegung, wenn dort kein Sprühvorgang stattfindet, im Vergleich zur Geschwindigkeit bei der Hinbewegung erhöht wird.

Bei der erfindungsgemäßen Lösung sind mindestens zwei Spülarme vorgesehen, die sich radial von der zentralen Welle aus erstrecken. Es können jedoch auch mehr als zwei Spülarme angeordnet sein, vorzugsweise zwei, drei, vier oder sechs Spülarme, je nach Durchmesser des Gaswäschers. Je mehr Spülarme vorgesehen sind, desto geringer ist das Winkelsegment, das von jedem Spülarm überstrichen wird, so daß sich auf diese Weise der Variabilitätsgrad der Spüleinrichtung weiter erhöhen läßt, ferner eine wesentliche Zeitersparnis erreicht wird, da zum Spülen des Gesamtquerschnittes des Gaskanales lediglich die Zeit benötigt wird, die ein Spülarm für das Überstreichen des zugehörigen Winkelsegmentes benötigt. Ferner kann der Verbrauch an Spülmedium reduziert werden, weil das mehrfache Überstreichen von Winkelsegmenten durch unterschiedliche Spülarme und die damit verbundene Mehrfachspülung von Winkelsegmenten entfällt.

Da auch bei der erfindungsgemäßen Lösung, bei der nur spezielle Winkelsegmente überstrichen werden, vom Mittelpunkt nach außen mit unterschiedlicher Umfangsgeschwindigkeit gearbeitet wird, entsteht in Radialrichtung eine ungleichmäßige Spülmediumbeaufschlagung. Diese kann durch die Verwendung von Düsen mit unterschiedlicher Durchflußleistung radial von innen nach außen kompensiert werden.

Als Spülmedium findet vorzugsweise eine Spülflüssigkeit, insbesondere Wasser, Verwendung. Dies soll nicht ausschließen, daß auch Gase als Spülmedium verwendet werden können.

Erfindungsgemäß können, je nach Bedarf, ein Winkelsegment oder mehrere Winkelsegmente gleichzeitig gespült werden. Ferner können nur die Hinbewegung oder nur die Herbewegung oder aber beide Bewegungen zur Spülung genutzt werden. Besonders verschmutzte Winkelsegmente können allein mehrfach hintereinander gespült werden. Des weiteren können verschieden lange Spülarme zum Einsatz gelangen.

Insgesamt gelingt es somit mit der erfindungsgemäßen Lösung jedes Winkelsegment mit dem optimalen Verbrauch an Spülmedium zu reinigen, d.h. der Verbrauch an Spülmedium kann auf das Notwendigste beschränkt und allen Betriebsverhältnissen angepaßt werden.

Das Winkelsegment, das von einem Spülarm überstrichen wird, entspricht vorzugsweise etwa dem Abstand zwischen benachbarten Spülarmen. Falls erwünscht, kann es jedoch auch größer gewählt werden, so daß sich Überlappungen bei den überstrichenen Bereichen ergeben.

Was die Funktionsweise des Spülarmes anbetrifft, so wird eine Lösung bevorzugt, bei der der Spülarm das Winkelsegment von seiner Ausgangslage aus in einer Richtung überstreicht und dann zur Ausgangslage zurückkehrt. Wie bereits erwähnt, können hierbei die Hin- und Herbewegung mit gleicher oder unterschiedlicher Geschwindigkeit erfolgen. So kann vorzugsweise bei der Bewegung, bei der kein Sprühvorgang erfolgt, mit einer höheren Geschwindigkeit gearbeitet werden. Bei einer anderen bevorzugten Lösung befindet sich der Spülarm in seiner Ausgangslage in der Mitte des Winkelsegmentes und überstreicht nacheinander beide Teilsegmente in entgegengesetzten Richtungen.

Bevorzugt wird eine Winkelbewegung über 90° bei Verwendung von vier Spülarmen.

Die erfindungsgemäß ausgebildete Spüleinrichtung findet vorzugsweise abströmseitig der Feinabscheiderstufe eines Gaswäschers Verwendung. Generell kann die Spüleinrichtung aber so angeordnet oder ausgebildet sein, daß die Spülarme über, zwischen und/oder unter einem oder mehreren Tropfenabscheidern angeordnet sind. So können beispielsweise bei zwei im Abstand voneinander angeordneten Tropfenabscheiderlagen Spülarme in einer Ebene unterhalb der Grobabscheiderstufe, zwischen der Grobabscheider- und Feinabscheiderstufe und über, d.h. abströmseitig, der Feinabscheiderstufe angeordnet sein, wobei sich diese Spülarme vorzugsweise an einer einzigen zentralen Welle befinden.

Die Zuführeinrichtung für das Spülmedium ist vorzugsweise als flexibler Schlauch ausgebildet, wobei eine Zuführeinrichtung mehreren Spülarmen zugeordnet sein kann. In der Zuführeinrichtung sind entsprechende Ventile vorgesehen, um die gewünschten variablen Steuerungsmöglichkeiten der erfindungsgemäß ausgebildeten Spüleinrichtung zu erreichen. Durch Zuordnung der Zuführeinrichtung zu mehreren Spülarmen können Ventile eingespart werden, wobei allerdings hierdurch die Variabilität der Einrichtung eingeschränkt wird.

Vorzugsweise finden somit flexible Zuführeinrichtungen für das Spülmedium Verwendung, die die hin- und hergehende Winkelbewegung bzw. oszillierende Bewegung der Spülarme ermöglichen.

Wie vorstehend erwähnt, können an einer einzigen zentralen Welle Spülarme in verschiedenen Ebenen angeordnet sein, wobei dieser Welle ein einziger Antrieb zugeordnet ist. Es besteht jedoch auch die Möglichkeit, jede Spülarmebene mit einem eigenen Antrieb zu versehen, d.h. die Welle in einzelne Wellenelemente aufzulösen, oder auch Kombinationen zu bilden, beispielsweise die beiden Spülebenen des Grobabscheiders auf einen Antrieb zu nehmen, ebenso die beiden Spülebenen des Feinabscheiders. Letztendlich kann hier in Abhängigkeit von den betrieblichen Erfordernissen und Kosten eine optimale Lösung ausgewählt werden.

Die Zuführung des Spülmediums zu den Spülarmen kann direkt, d.h. über die vorstehend erwähnten flexiblen Zuführeinrichtungen (Schläuche), oder über die zentrale Welle erfolgen. Bei der zuletzt genannten Lösung werden Rohre oder Schläuche durch die zentrale Welle einem oder mehreren Spülarmen zugeführt. Dabei ist vorzugsweise die zentrale Welle als koaxiales Rohr für die Unterbringung von vertikalen Zuführungsrohren für die Spülarme ausgeführt. Der Anschluß an die Zuführungsrohre erfolgt dabei vorzugsweise ebenfalls mit Hilfe von flexiblen Schläuchen.

Lagerung, Antrieb und Ventile sind bei einer Ausführungsform frei zugängig auf dem Dach des Gaswäschers angeordnet. Bei einer anderen Ausführungsform sind Lagerung und Antrieb im Gasstrom angeordnet. Diese Ausführungsform ist für Wäscher mit konzentrischem Austritt geeignet.

Die Erfindung wird nachfolgend anhand von Ausführungsbeispielen in Verbindung mit der Zeichnung im einzelnen erläutert. Es zeigen:
- Figur 1: einen Vertikalschnitt durch einen Teil des Gasabführkanales eines Gaswäschers;
- Figur 2: eine Draufsicht auf den Wellenantrieb der Figur 1;
- Figur 3: eine schematische Draufsicht auf eine mit vier Flügelarmen versehene Welle einer Spüleinrichtung;
- Figur 4: eine Ansicht entsprechend Figur 3 mit abgeänderten Zuführeinrichtungen für das Spülmedium;
- Figur 5: einen Vertikalschnitt durch den oberen Teil des Gasabführkanales eines Gaswäschers mit einer anderen Ausführungsform einer Spüleinrichtung; und

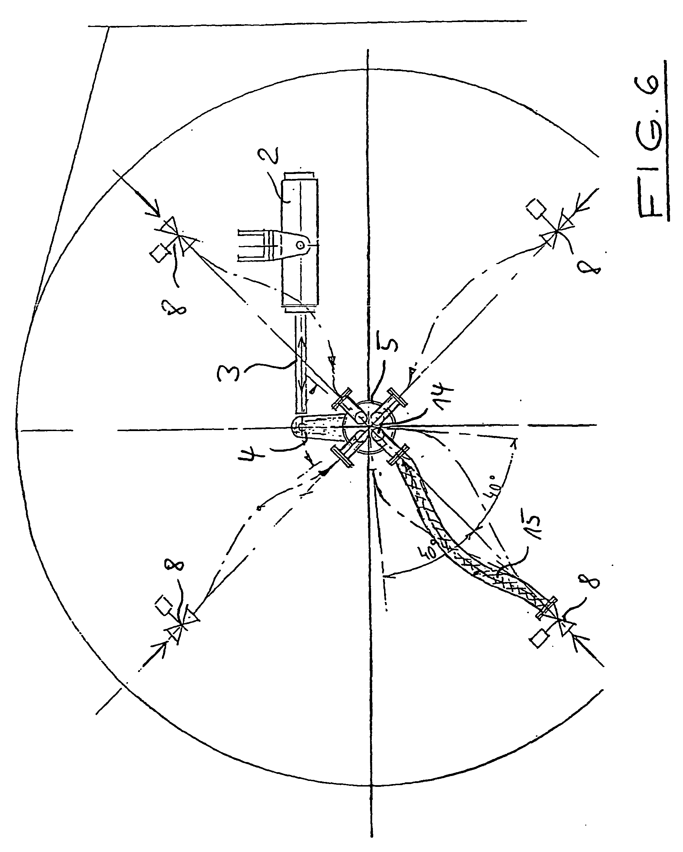

- Figur 6: eine Draufsicht auf das Dach des Gaswäschers der Figur 5.

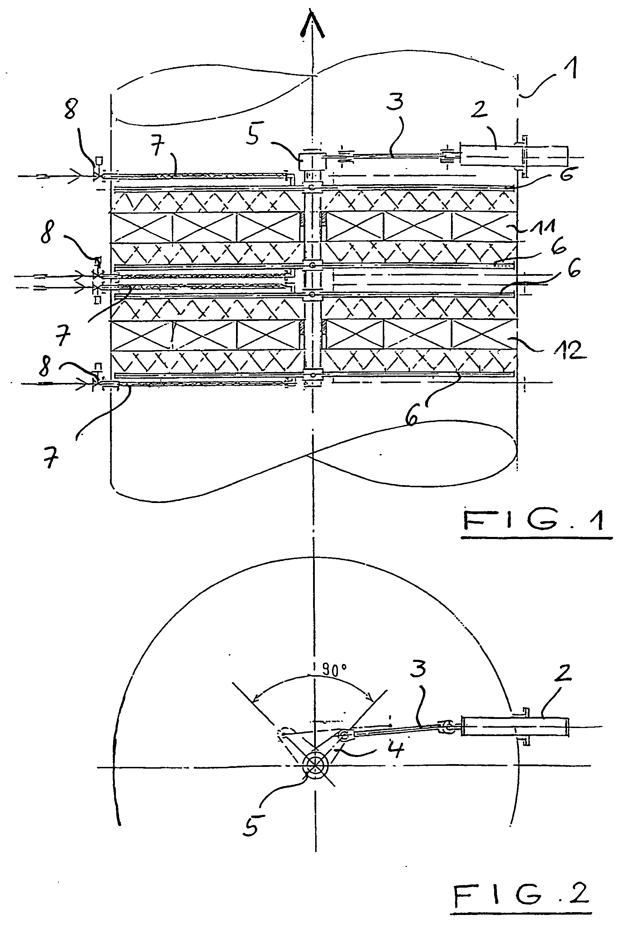

Der in Figur 1 teilweise im Vertikalschnitt dargestellte Gasabführkanal 1 eines Gaswäschers erstreckt sich in vertikaler Richtung und wird von unten nach oben von einem Gas durchströmt, das als erstes einen ersten Tropfenabscheider (Grobabscheider) 12 und danach einen zweiten Tropfenabscheider (Feinabscheider) 11 passiert. Beide Tropfenabscheider erstrecken sich senkrecht zur Achse des Gasabführkanales 1. Sie sind in der üblichen Weise ausgebildet und werden daher an dieser Stelle nicht im einzelnen beschrieben.

In der Mitte des Kanales 1 erstreckt sich eine Welle 5, die über geeignete Lagereinrichtungen (nicht gezeigt) gelagert ist. Diese Welle führt eine hin- und hergehende Winkelbewegung (oszillierende Bewegung) aus, und zwar über einen Winkel von 90°, wie in Figur 2 gezeigt. Zur Durchführung dieser Bewegung besitzt die Welle an ihrem oberen Ende einen sich rechtwinklig zur Welle erstreckenden Hebel 4, der gelenkig mit einer Antriebsstange 3 verbunden ist. Diese Antriebsstange 3 ist gelenkig mit der Kolbenstange eines Stellzylinders (Hydraulikzylinders) 2 verbunden. Durch das Ein- und Ausfahren der Kolbenstange des Stellzylinders 2 wird der Hebel 4 so bewegt, daß er eine Winkelbewegung über einen Winkel von 90° durchführt und somit die Welle hin- und herbewegt.

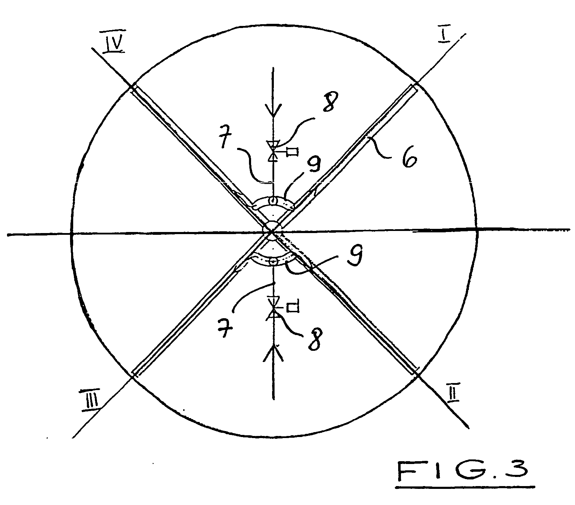

An der Welle sind auf vier verschiedenen Ebenen Spülarme 6 angeordnet, die fest mit der Welle verbunden sind und somit deren Bewegung durchführen. Pro Ebene sind vier Flügelarme 6 vorgesehen, die miteinander jeweils einen Winkel von 90° bilden. Jeder Spülarm 6 ist mit einer Vielzahl von nach oben oder unten weisenden Düsen bestückt, über die ein Spülmedium, insbesondere Wasser, auf den darunter oder darüber befindlichen Tropfenabscheider abgegeben werden kann. Auf diese Weise werden die Tropfenabscheider gereinigt. Der Spülvorgang erfolgt, während die in Figur 3 gezeigten Spülarme 6 ihre Bewegung über das Winkelsegment von 90° durchführen, und zwar ausschließlich während der Hinbewegungsphase. Während der Rückbewegungsphase erfolgt bei diesem Ausführungsbeispiel kein Spülvorgang. Es ist klar, daß auch während beiden Phasen ein Spülvorgang stattfinden kann.

Das Spülmedium (Wasser) wird den Spülarmen 6, die mit den nach oben oder nach unten weisenden Düsen versehen sind, über flexible Schläuche 7 zugeführt, die in Figur 3 nur schematisch angedeutet sind. Jeweils ein Schlauch 7 ist zwei Spülarmen 6 zugeordnet und mündet in ein Verbindungsrohr 9 zwischen zwei Spülarmen, so daß das über den Schlauch 7 zugeführte Spülmedium gleichzeitig auf zwei Spülarmen verteilt wird. In Figur 1 ist für jede Spülarmebene nur ein flexibler Schlauch 7 dargestellt. Es versteht sich aber, daß für jede Ebene zwei Schläuche vorgesehen sind, von denen jeweils einer zwei Spülarme 6 bedient.

Die Schläuche sind mit geeigneten Ventilen 8 versehen, über die die Spülmediumzufuhr zu denen jeweiligen Spülarmen gesteuert werden kann. Mit diesen Ventilen kann das Spülmedium sowohl dosiert zugeführt als auch ganz abgesperrt werden, um beispielsweise nur zwei Spülarme mit dem Spülmedium zu versorgen, wenn nur die von zwei Spülarmen überstrichenen Winkelsegmente gespült werden sollen.

Ein entsprechender Steuerungsmechanismus für den Antrieb (Stellzylinder 2) der Welle 5 ist nicht dargestellt. Es versteht sich jedoch, daß ein solcher Steuerungsmechanismus vorgesehen ist, der beispielsweise bewirkt, daß sich die Welle bei ihrer Hinbwegung über das Winkelsegment relativ langsam und kontinuierlich dreht und sich bei ihrer Rückbewegung rasch in die Ausgangslage zurückdreht. Hierdurch wird erreicht, daß bei der Rückbewegung ohne Spülbetrieb ein rasches Zurückführen der Welle in die Ausgangslage erfolgt.

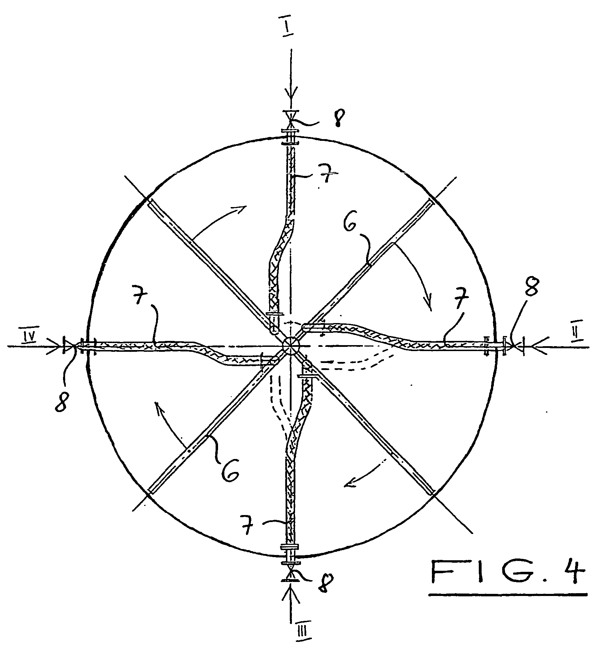

Figur 4 zeigt eine Ausführungsform, bei der ebenfalls ein Spülrad mit vier Spülarmen 6 vorgesehen ist. Bei dieser Ausführungsform ist zur Zuführung des Spülmediums jedem Spülarm 6 ein flexibler Schlauch 7 zugeordnet, der mit einem Ventil 8 versehen ist.

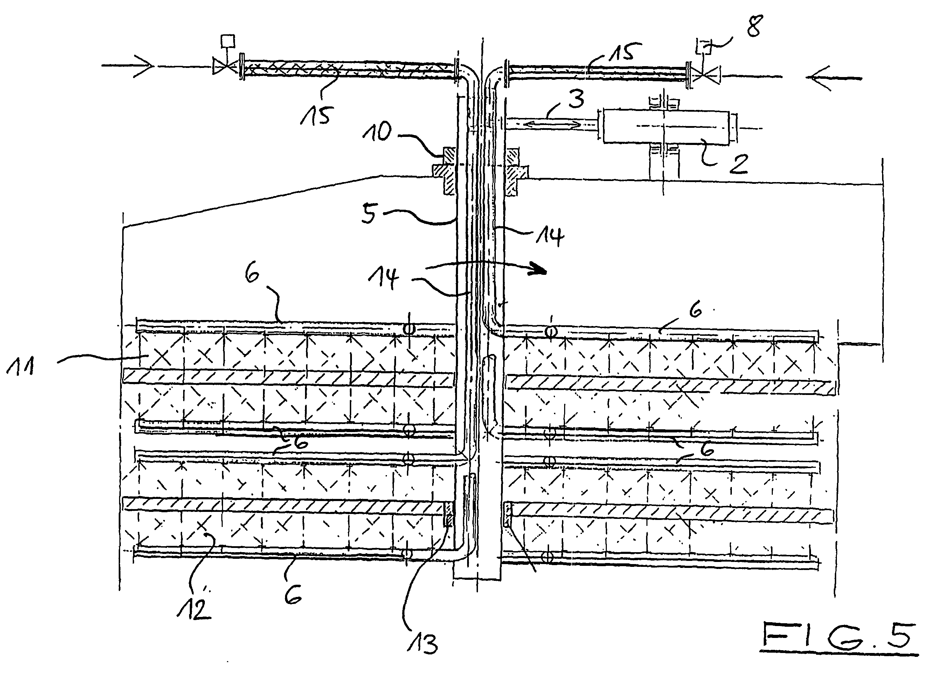

Bei der in Figur 5 dargestellten Ausführungsform sind ebenfalls ein erster Tropfenabscheider (Grobabscheider) 12 und ein zweiter Tropfenabscheider (Feinabscheider) 11 übereinander in einem Gasabführkanal eines Gaswäschers vorgesehen. Mittig im Gasabführkanal ist eine als Antriebswelle dienende Hohlwelle 5 angeordnet, die mit radial von dieser Welle aus verlaufenden Spülarmen 6 fest verbunden ist. Es sind wiederum vier Ebenen von Spülarmen 6 vorgesehen, wobei sich eine Spülarmebene jeweils direkt unter und direkt über einem Tropfenabscheider befindet. Die zentrale Hohlwelle 5 ist über ein unteres Führungslager 13 und ein oberes Drucklager 10, das am Wäscherdach angeordnet ist, gelagert. Die Welle wird über eine mit der Kolbenstange eines Stellzylinders 2 in Verbindung stehende Antriebsstange 3 angetrieben. Der Stellzylinder 2 ist mit einem geeigneten Steuermechanismus (nicht gezeigt) versehen.

Auch bei dieser Ausführungsform sind auf jeder Spülarmebene vier Spülarme 6 vorgesehen. Jeder Spülarm hat eine eigene Spülmediumzuführeinrichtung, die sich bei dieser Ausführungsform durch die zentrale Hohlwelle 5 erstreckt. Die Zuführeinrichtung eines jeden Spülarmes wird von einem Zuführrohr 14 gebildet, das sich in der zentralen Hohlwelle erstreckt und in den jeweiligen Spülarm 6 übergeht. Im oberen Bereich ist das Zuführrohr 14 an einen flexiblen Schlauch 15 angeschlossen, der ein Ventil 8 aufweist.

Im Unterschied zu den vorstehend beschriebenen Ausführungsformen erfolgt somit bei dieser Ausführungsform die Zuführung des Spülmediums zu den Spülarmen durch die als Hohlwelle ausgebildete zentrale Antriebswelle 5. In der Antriebswelle sind vier Zuführrohre 14 angeordnet, die jeweils die Versorgung einer Spülarmebene, d.h. von vier Spülarmen, sicherstellen.

Die hier in Rede stehenden Tropfenabscheider können flachliegend oder schräg, insbesondere dachförmig oder sheddachförmig, angeordnet sein. Die Erfindung ist für alle Ausführungsformen geeignet.

Der hier verwendete Begriff "Spülen" schließt den Begriff "Waschen" ein.

Bei der in Figur 5 gezeigten Ausführungsform können die Spülarme 6 auch alle die Hohlwelle auf einer Ebene verlassen. Andere Verteilungen sind ebenfalls möglich. Der Stellantrieb kann auf elektrische, pneumatische oder hydraulische Weise wirken.

## Patentansprüche

1. Spüleinrichtung für flachliegende oder schräg angeordnete Tropfenabscheider in Gaswäschern mit einer zentralen Welle (5) mit mindestens zwei sich hiervon radial erstreckenden Spülarmen (6), die mit Düsen zum Besprühen eines Tropfenabscheiders versehen sind, einer an die Spülarme (6) angeschlossenen Zuführeinrichtung für das Spülmedium und einem Antrieb (2) für die Welle (5),
**dadurch gekennzeichnet, daß**
der Antrieb (2) der Welle (5) eine hin- und hergehende Winkelbewegung über ein bestimmtes Winkelsegment aufprägt,
der Antrieb (2) einen Steuermechanismus aufweist, mit dem die Geschwindigkeit der Winkelbewegung der Welle (5) steuerbar ist, und
die Zuführeinrichtung Ventile (8) aufweist, mit denen die Spülmediumzufuhr zu den jeweiligen Spülarmen (6) so individuell steuerbar ist, daß ein Spülvorgang eines Spülarmes (6) nur während der Hinbewegung, nur während der Rückbewegung, während beider Bewegungen oder überhaupt nicht stattfindet.

2. Spüleinrichtung nach Anspruch 1, **dadurch gekennzeichnet, daß** der Spülvorgang nur während der Hin- oder Herbewegung erfolgt.

3. Spüleinrichtung nach Anspruch 1 oder 2, **dadurch gekennzeichnet, daß** sie mehrere sich radial von der zentralen Welle (5) aus erstreckende Spülarme (6) aufweist.

4. Spüleinrichtung nach einem der vorangehenden Ansprüche, **dadurch gekennzeichnet, daß** das Winkelsegment etwa dem Abstand zwischen benachbarten Spülarmen (6) entspricht.

5. Spüleinrichtung nach einem der vorangehenden Ansprüche, **dadurch gekennzeichnet, daß** der Spülarm (6) das Winkelsegment von seiner Ausgangslage aus in einer Richtung überstreicht und dann zur Ausgangslage zurückkehrt.

6. Spüleinrichtung nach einem der Ansprüche 1 bis 4, **dadurch gekennzeichnet, daß** sich der Spülarm (6) in seiner Ausgangslage in der Mitte des Winkelsegmentes befindet und nacheinander beide Teilsegmente in entgegengesetzten Richtungen überstreicht.

7. Spüleinrichtung nach einem der vorangehenden Ansprüche, **dadurch gekennzeichnet, daß** die Winkelbewegung über 90° erfolgt.

8. Spüleinrichtung nach einem der vorangehenden Ansprüche, **dadurch gekennzeichnet, daß** sie eine Vielzahl von verschieden langen Spülarmen aufweist.

9. Spüleinrichtung nach einem der vorangehenden Ansprüche, **dadurch gekennzeichnet, daß** die Spülarme (6) über, zwischen und/oder unter einem oder mehreren Tropfenabscheidern (11, 12) angeordnet sind.

10. Spüleinrichtung nach einem der vorangehenden Ansprüche, **dadurch gekennzeichnet, daß** die Zuführeinrichtung für das Spülmedium als flexibler Schlauch (7) ausgebildet ist.

11. Spüleinrichtung nach einem der vorangehenden Ansprüche, **dadurch gekennzeichnet, daß** eine Zuführeinrichtung mehreren Spülarmen (6) zugeordnet ist.

12. Spüleinrichtung nach einem der vorangehenden Ansprüche, **dadurch gekennzeichnet, daß** die Spülarme (6) über die zentrale Welle (5) mit Spülmedium beaufschlagt werden.

13. Spüleinrichtung nach Anspruch 12, **dadurch gekennzeichnet, daß** die zentrale Welle (5) als Hohlwelle ausgebildet ist und in ihrem Inneren ein oder mehrere Zuführrohre (14) zur Zuführung des Spülmediums zu den Spülarmen (6) aufweist.

## Claims

1. A rinsing means for flat or inclined mist eliminators in gas washers, said rinsing means comprising a central shaft (5) with at least two radially extending rinsing arms (6) which are provided with nozzles for spraying onto a mist eliminator, supply means for the rinsing medium connected to the rinsing arms (6) and drive means (2) for the shaft (5),
**characterized in that**
the drive means (2) applies to the shaft (5) a reciprocating angular movement over a definite angle segment,
the drive means (2) includes a control mechanism with which the velocity of the angular movement of the shaft (5) is controllable, and
the supply means includes valves (8) with which the supply of the rinsing medium to the respective rinsing arms (6) is adapted to be controlled individually in such a manner that a rinsing process of a rinsing arm (6) takes place only during the forward movement, only during the back movement, during both movements or not at all.

2. The rinsing means according to claim 1, **characterized in that** the rinsing process takes place only during the forward or back movement.

3. The rinsing means according to claim 1 or 2, **characterized in that** it includes a plurality of rinsing arms (6) radially extending from the central shaft (5).

4. The rinsing means according to one of the preceding claims, **characterized in that** the angle segment approximately corresponds to the distance between adjacent rinsing arms (6).

5. The rinsing means according to one of the preceding claims, **characterized in that** the rinsing arm (6) sweeps over the angle segment in one direction from its original position and then returns to its original position.

6. The rinsing means according to one of the claims 1 to 4, **characterized in that** the rinsing arm (6) in its original position is in the middle of the angle segment and subsequently sweeps over both part segments in opposite directions.

7. The rinsing means according to one of the preceding claims, **characterized in that** the angular movement is carried out over 90°.

8. The rinsing means according to one of the preceding claims, **characterized in that** it includes a plurality of rinsing arms having a different length.

9. The rinsing means according to one of the preceding claims, **characterized in that** the rinsing arms (6) are arranged over, between and/or below one or a plurality of the mist eliminators (11, 12).

10. The rinsing means according to one of the preceding claims, **characterized in that** the supply means for the rinsing medium is formed as flexible hose (7).

11. The rinsing means according to one of the preceding claims, **characterized in that** one supply means is associated with a plurality of rinsing arms (6).

12. The rinsing means according to one of the preceding claims, **characterized in that** the rinsing arms (6) are applied with rinsing medium through the central shaft (5).

13. The rinsing means according to claim 12, **characterized in that** the central shaft (5) is formed as hollow shaft and includes in its interior one supply tube or a plurality of supply tubes (14) for supplying the rinsing medium to the rinsing arms (6).

## Revendications

1. Dispositif de lavage pour séparateur de gouttes posé à plat ou agencé en oblique dans des épurateurs de gaz avec un arbre (5) central ayant au moins deux bras de lavage (6) s'étendant de manière radiale de celui-ci et qui sont munis de buses de pulvérisation d'un séparateur de gouttes, un dispositif d'amenée raccordé aux bras de lavage (6) pour le liquide de lavage et un entraînement (2) pour l'arbre (5),
**caractérisé en ce que**
l'entraînement (2) de l'arbre (5) imprime un mouvement angulaire de va-et-vient par un certain segment angulaire,
l'entraînement (2) présente un mécanisme de commande grâce auquel la vitesse du mouvement angulaire de l'arbre (5) peut être commandée, et
le dispositif d'amenée présente des soupapes (8) avec lesquelles l'arrivée du liquide de lavage peut être commandée vers les bras de lavage (6) respectifs de façon à ce point individuelle que le processus de lavage d'un bras de lavage (6) peut ne se produire que pendant le mouvement d'aller, que pendant le mouvement de retour, que pendant les deux mouvements ou peut ne pas se produire du tout.

2. Dispositif de lavage selon la revendication 1, **caractérisé en ce que** le processus de lavage ne s'effectue que pendant le mouvement d'aller ou celui de retour.

3. Dispositif de lavage selon la revendication 1 ou 2, **caractérisé en ce qu'**il présente plusieurs bras de lavage (6) s'étendant de manière radiale de l'arbre central (5).

4. Dispositif de lavage selon l'une quelconque des revendications précédentes, **caractérisé en ce que** le segment angulaire correspond approximativement à la distance entre des bras de lavage (6) adjacents.

5. Dispositif de lavage selon l'une quelconque des revendications précédentes, **caractérisé en ce que** le bras de lavage (6) balaye le segment angulaire de son point de départ dans une certaine direction, puis retourne à son point de départ.

6. Dispositif de lavage selon l'une quelconque des revendications 1 à 4, **caractérisé en ce que** le bras de lavage (6) se trouve, à son point de départ, au milieu du segment angulaire et balaye, l'un après l'autre, les deux segments partiels dans des directions opposées.

7. Dispositif de lavage selon l'une quelconque des revendications précédentes, **caractérisé en ce que** le mouvement angulaire est de 90°.

8. Dispositif de lavage selon l'une quelconque des revendications précédentes, **caractérisé en ce qu'**il présente plusieurs bras de lavage de différentes longueurs.

9. Dispositif de lavage selon l'une quelconque des revendications précédentes, **caractérisé en ce que** les bras de lavage (6) sont agencés au-dessus, entre et/ou sous un ou plusieurs séparateurs de gouttes (11, 12).

10. Dispositif de lavage selon l'une quelconque des revendications précédentes, **caractérisé en ce que** le dispositif d'amenée du liquide de ravage est configuré sous forme d'un tuyau souple (7).

11. Dispositif de lavage selon l'une quelconque des revendications précédentes, **caractérisé en ce qu'**un dispositif d'amenée est associé à plusieurs bras de lavage (6).

12. Dispositif de lavage selon l'une quelconque des revendications précédentes, **caractérisé en ce que** les bras de lavage (6) sont sollicités par l'arbre central (5) avec le liquide de lavage.

13. Dispositif de lavage selon la revendication 12, **caractérisé en ce que** l'arbre central (5) est configuré comme un arbre creux et présente, à l'intérieur de lui, un ou plusieurs tubes d'amenée (14) pour l'amenée du liquide de lavage vers les bras de lavage (6).
